# EUROPÄISCHE PATENTSCHRIFT

(11) **EP 2 883 073 B1**
(45) Veröffentlichungstag und Bekanntmachung des Hinweises auf die Patenterteilung: **22.11.2017**
(21) Anmeldenummer: 13745787.5
(22) Anmeldetag: 02.07.2013
(51) Int. Cl.: G01S 3/80

(54) **VERFAHREN UND VORRICHTUNG ZUM KLASSIFIZIEREN VON WASSERFAHRZEUGEN**
METHOD AND DEVICE FOR CLASSIFYING WATERCRAFT
PROCÉDÉ ET DISPOSITIF POUR LE CLASSEMENT DE VÉHICULES NAUTIQUES

(30) Priorität: 07.08.2012 DE 102012015638
(43) Veröffentlichungstag der Anmeldung: 17.06.2015
(73) Patentinhaber: ATLAS ELEKTRONIK GmbH, 28309 Bremen (DE)
(72) Erfinder: MEERPOHL, Gregor, 27793 Wildeshausen (DE); KRÜGER, Thomas, 28357 Bremen (DE); TIESTE, Ralph, 27711 Osterholz-Scharmbeck (DE)
(86) Internationale Anmeldenummer: PCT/DE2013/100240
(87) Internationale Veröffentlichungsnummer: WO 2014/023293

(56) Entgegenhaltungen:
- DE-A1- 4 220 429
- RAJAGOPAL R ET AL: "Target classification in a passive sonar-an expert system approach", 19900403; 19900403 - 19900406, 3. April 1990 (1990-04-03), Seiten 2911-2914, XP010641701,
- "Sonar target recognition" In: Kil, D. H. et al: "Wiley Encyclopedia of Electrical and Electroncis Enginieering", 1999, John Wiley & Sons, Inc, XP002716007, Seiten 683-699, Seite 683, rechte Spalte - Seite 689, rechte Spalte, Zeile 21 Seite 693, rechte Spalte, Zeile 18 - Seite 698, linke Spalte
- N. N. de Moura, J. M. de Seixas, Ricardo Ramos: "Passive Sonar Signal Detection and Classification Based on Independent Component Analysis" In: "Sonar Systems", 12. September 2011 (2011-09-12), Prof. Nikolai Kolev (Ed.), XP002716008, ISBN: 978-953-307-345-3 Seiten 93-104, DOI: 10.5772/18286, das ganze Dokument
- Zak, Andrzej: "Ship's Hydroacoustics Signatures Classification Using Neural Networks" In: "Self Organizing Maps - Applications and Novel Algorithm Design", 21. Januar 2011 (2011-01-21), Josphat Igadwa Mwasiagi, XP002716009, ISBN: 978-953-307-546-4 Seiten 209-232, DOI: 10.5772/14016,
- W. SOARES-FILHO ET AL: "Enlarging neural class detection capacity in passive sonar systems", 2002 IEEE INTERNATIONAL SYMPOSIUM ON CIRCUITS AND SYSTEMS. PROCEEDINGS (CAT. NO.02CH37353), Bd. 3, 1. Januar 2002 (2002-01-01), Seiten III-105, XP055087084, DOI: 10.1109/ISCAS.2002.1010171 ISBN: 978-0-78-037448-5
- HYUN-SIK KIM ET AL: "Intelligent PSR estimator for feature extraction of a passive sonar target", INTERNATIONAL JOURNAL OF CONTROL, AUTOMATION AND SYSTEMS, Bd. 8, Nr. 3, 1. Juni 2010 (2010-06-01), Seiten 677-682, XP055086665, ISSN: 1598-6446, DOI: 10.1007/s12555-010-0322-5
- ARVESON PAUL T ET AL: "Radiated noise characteristics of a modern cargo ship", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, Bd. 107, Nr. 1, 1. Januar 2000 (2000-01-01), Seiten 118-129, XP012001413, ISSN: 0001-4966, DOI: 10.1121/1.428344

## Beschreibung

Die Erfindung betrifft ein Verfahren zum Klassifizieren eines oder mehrerer Wasserfahrzeuge anhand der von diesen Fahrzeugen abgestrahlten oder gesendeten Schallwellen der im Oberbegriff von Anspruch 1 genannten Art sowie eine Vorrichtung zum Ausführen eines derartigen Verfahrens gemäß dem Oberbegriff von Anspruch 9.

Es ist bekannt, dass Wasserfahrzeuge, wie Überwasserschiffe, U-Boote etc., anhand der von ihnen abgestrahlten Betriebsgeräusche detektiert und klassifiziert werden können. Dazu werden diese Betriebsgeräusche, welche hauptsächlich durch Antriebsmaschinen verursacht werden, mittels einer Sonaranlage empfangen und zugehörige Empfangssignale erzeugt. Anschließend werden die Empfangssignale in ein Frequenzspektrum transformiert, welches nach einer Betragsbildung bzgl. Frequenzlinien und zugehörigen Frequenzen analysiert wird. Aufgrund der antreibenden Propeller, der Turbinen, der Generatoren und/oder Pumpen weist ein aus dem Frequenzspektrum des Empfangssignals erzeugtes Amplitudenspektrum signifikante Frequenzlinien auf.

DE 42 204 29 A1 zeigt ein Verfahren zur Detektion und Klassifizierung eines propellerbetriebenen Fahrzeugs auf der Grundlage von Fuzzy-Logiken. Es werden bei diesem Verfahren Zugehörigkeitsfunktionen definiert, wann es plausibel erscheint, dass im Frequenzspektrum eine Spektrallinie vorliegt und diese Spektrallinie nicht zum allgemeinen Rauschen gehört, sondern Bestandteil einer Schar von Harmonischen oder deren Grundfrequenz selber ist. Nachteilig hierbei ist jedoch eine aufwendige Feinabstimmung für die Regelung des Systems. So muss die Zugehörigkeitsfunktion der unscharfen Menge in aufwendiger Feinarbeit nachgebessert werden. Nachteilig hierbei ist jedoch, dass lediglich Frequenzlinien als Grundfrequenz oder ihre Harmonischen in diesem Verfahren zur Klassifizierung berücksichtigt werden.

In Rajagopal R. et al. "Target classification in a passive sonar - an expert system approach", 2. April 1990, S. 2911-2914, XP010641701 wird ein Verfahren zur Klassifikation von Wasserfahrzeugen offenbart, wobei zur Extraktion der Eigenschaften eine DEMON-Analyse und zur Klassifikation ein Vergleich mit Daten einer Datenbank mittels eines Expertensystems verwendet wird.

Im Artikel "Sonar target recognition" in: Kil D. H. et al., Wiley Encylopedia of Electrical and Electroncis Engineering, 1999, XP002716007 wird die Sonarzielerkennung mittels Detektion, Klassifikation und Identifikation beschrieben, wobei aufbereitete passive Sonardaten oder Fahrzeugeigenschaften mit gespeicherten Daten in einer Datenbank verglichen und erkannt werden.

De Moura N. N. et al. "Passive Sonar Signal Detection and Classification based on independent component analysis" in: "Sonar Systems", Prof. Nikolai Kolev (Ed.), S. 93-104, XP002716008 beschreibt ein Vorbearbeitungsschema zur Reduzierung von Interferenzen aus Nachbarschaftsrichtungen, welche bei einem passiven Sonarsystem die Detektion und Klassifikation von Zielen aus vorgegebenen Richtungen stören.

Zak A. "Ship's Hydroacoustics Signatures Classification using Neural Networks", in: "Self Organizing Maps - Applications and Novel Algorithm Design" 21. Jan. 2011, Josphat Igadwa Mwasiagi, S. 209-232, XP002716009 beschreibt die Klassifikation von hydroakustischen Signaturen von Schiffen unter Verwendung von neuralen Netzwerken für einfache Fälle ohne Geräuschänderung. Für ein sich bewegendes Schiff können spezielle Frequenzen speziellen Geräuschquellen wie Dieselgenerator oder Hauptmaschine zugeordnet werden.

Der Erfindung liegt daher das Problem zugrunde, ein Verfahren zu schaffen, welches die automatische Klassifizierung von Wasserfahrzeugen anhand deren abgestrahlten oder gesendeten Schallwellen verbessert. Die Erfindung löst dieses Problem durch die Merkmale eines Verfahrens zum Klassifizieren eines oder mehrerer Wasserfahrzeuge gemäß Anspruch 1 sowie eine entsprechende Vorrichtung zum Ausführen des Verfahrens mit den Merkmalen des Anspruchs 9.

Typischerweise erzeugen Antriebssysteme und andere Maschineneinrichtungen eines Wasserfahrzeugs Vibrationen, wodurch Schallwellen von diesem Wasserfahrzeug erzeugt werden, während es sich durch das Wasser bewegt. Diese Schallwellen werden zusammen mit Umgebungsrauschen von Wasserschallaufnehmern einer Sonar-Empfangsanlage als Empfangssignale empfangen. Um ein Wasserfahrzeug, insbesondere ein Überwasserschiff oder ein U-Boot, zu klassifizieren, werden die Empfangssignale der Sonar-Empfangsanlage einer Frequenzanalyse zum Erzeugen eines komplexen Frequenzspektrums unterzogen. Das Frequenzspektrum setzt sich üblicherweise aus seinem Betrag, dem Amplitudenspektrum, und seiner Phase, dem Phasenspektrum, zusammen.

Das Amplitudenspektrum weist aufgrund von Propellern, Turbinen, Getriebe, Generatoren, Pumpen etc. aus dem allgemeinen Rauschen herausragende Frequenzlinien auf. Dabei ist eine Frequenzlinie eine Frequenz oder ein kleiner Frequenzbereich, welcher sich entsprechend einer vorgegebenen Frequenzauflösung über mehrere Frequenzzellen erstreckt.

Entsprechend dem erfindungsgemäßen Verfahren werden in einem Frequenzlinienmustererkennungsmodul charakteristische Fahrzeugparameter des zu klassifizierenden Fahrzeugs ermittelt. Dazu wird ein im Amplitudenspektrum enthaltenes, zielbezogenes Frequenzlinienmuster herangezogen.

Ein zielbezogenes Frequenzlinienmuster eines Fahrzeugs beinhaltet diejenigen Frequenzlinien, welche in einer harmonischen Relation zueinander stehen, d.h. einen annähernd gleichen Frequenzabstand aufweisen und zu einem gemeinsamen Satz von Frequenzlinien gehören und somit einen Frequenzliniensatz bilden. Ferner beinhaltet ein Frequenzlinienmuster evtl. vorhandene Einzellinien. Das sind diejenigen Frequenzlinien, die eine hinreichende Amplitude aufweisen und keinem Frequenzliniensatz zugeordnet werden können. Das Frequenzlinienmuster bzw. die Frequenzliniensätze und Einzellinien werden dabei mittels einer automatischen Frequenzlinienmustererkennung bestimmt und/oder manuelle Eingaben vom Bediener sowie andere Klassifizierungsinformationen werden berücksichtigt.

Neben dem Frequenzlinienmuster werden auch allgemeine Linienmerkmale der Frequenzlinien bei der Klassifizierung berücksichtigt, wie bspw. die Form der Frequenzlinien, welche stabil, diffus, stetig, kurzzeitig, zyklisch, breit, schmal sein kann. Ebenso können besondere Linienstrukturen der Frequenzlinien bei der Klassifizierung berücksichtigt werden, wie bspw. eine auffällige Multi-Linien-Struktur. Diese Linienmerkmale der Frequenzlinien werden in der automatischen Linienmustererkennung erkannt oder aber manuell eingegeben. Aus den Linienmerkmalen kann vorteilhaft auf für die Klassifizierung relevante Eigenschaften des zu klassifizierenden Wasserfahrzeugs geschlossen werden.

Die charakteristischen Fahrzeugparameter enthalten bspw. Motorinformationen, Propellerinformationen und/oder Getriebeinformationen und werden in einem Datenbankvergleichsmodul mit vorhandenen Parameterwerten einer Datenbank verglichen. Aus diesem Vergleich der charakteristischen Fahrzeugparameter mit den Parameterwerten der Datenbank wird in einem Bewertungsmodul ein zugehöriger Übereinstimmungsfaktor ermittelt, welcher in Abhängigkeit von Übereinstimmungen und Abweichungen den Vergleich bewertet. In einem Auswertemodul wird anhand des Übereinstimmungsfaktors eine Klassifizierung des Wasserfahrzeugs vorgenommen und ausgegeben.

Die erfindungsgemäße Klassifizierung ist effektiv, da vollständige zielbezogene Frequenzlinienmuster, also Frequenzliniensätze und Einzellinien, wenn vorhanden, innerhalb eines Amplitudenspektrums für einen Vergleich mit bekannten Informationen automatisch berechnet und/oder berücksichtigt werden.

Ferner können mehrere Amplitudenspektren aus verschiedenen Frequenzanalysen bei der Klassifizierung berücksichtigt werden, wodurch sich vorteilhaft eine größere Zuverlässigkeit bei der Klassifizierung erzielen lässt.

In einer bevorzugten Ausführungsform der Erfindung wird das Amplitudenspektrum mittels einer DEMON (Detection of Envelope Modulation on Noise)-Analyse oder einer LOFAR (Low Frequency Analysis and Recording)-Analyse ermittelt, Bei der LOFAR-Analyse wird ein Amplitudenspektrum eines von einem Fahrzeug abgestrahlten Betriebsgeräusches erzeugt, bei dem Frequenzlinien im niederfrequenten Bereich aus dem allgemeinen Rauschen herausragen. Da diese Frequenzlinien durch die Antriebssysteme und sonstige Maschinen an Bord des Fahrzeugs verursacht werden, ist dieser niederfrequente Bereich besonders gut geeignet, um Fahrzeuge zu klassifizieren.

Bei der DEMON-Analyse wird der hochfrequente Anteil des empfangenen Geräusches des zu klassifizierenden Fahrzeugs über einen Bandpass und einen Hüllkurvendemodulator demoduliert. Das daraus erzeugte Amplitudenspektrum liefert Auskunft über die Anzahl der antreibenden Propeller, ihre Blattzahl und die Drehzahl, aus denen dann auf den Fahrzeugtyp geschlossen werden kann.

Bevorzugt wird das aus einem Frequenzspektrum durch Betragsbildung abgeleitete Amplitudenspektrum normiert. So werden die Frequenzamplituden im gesamten Frequenzbereich angeglichen. Das hat den Vorteil, dass das Amplitudenspektrum eine relative Bewertung der Amplituden, d.h. einen Vergleich der Amplituden-Differenzen bzgl. der jeweiligen Frequenzumgebungen, ermöglicht. Bevorzugt wird das Amplitudenspektrum an die Entfernung des zu klassifizierenden Fahrzeugs bzw. die Lautstärke des von ihm abgestrahlten Betriebsgeräusches angepasst.

Ferner wird das Amplitudenspektrum über einen vorbestimmten Zeitraum gemittelt. Das dient zum einen der Rauschunterdrückung und zum anderen der Darstellung von verlässlichen Frequenzlinien über die Zeit.

Der Einfachheit halber wird im weiteren Verlauf der Beschreibung unter einem Spektrum eines Empfangssignals das Amplitudenspektrum oder ein aus dem Amplitudenspektrum abgeleitetes Spektrum verstanden.

In einer weiteren bevorzugten Ausführungsform der Erfindung kann die Datenbank im laufenden Betrieb mit neuen Parametern erweitert werden. Dazu wird die Datenbank unterteilt in eine Grunddatenbank und eine temporäre Datenbank. Die Grunddatenbank enthält vorbestimmte Parameterwerte für charakteristische Fahrzeugparameter, um eine Mehrzahl bekannter Fahrzeuge zu klassifizieren. Wird im laufenden Betrieb des erfindungsgemäßen Verfahrens ein Fahrzeug detektiert, welches noch nicht mit seinen charakteristischen Fahrzeugparametern in der Grunddatenbank abgelegt ist, so können die Parameter mit ihren Werten in der temporären Datenbank gespeichert werden, um vorteilhaft bei einem nächsten Kontakt mit einem derartigen Fahrzeug auch dieses Fahrzeug klassifizieren zu können.

Gemäß einer weiteren bevorzugten Ausführungsform der Erfindung werden die Frequenzlinienmuster im Amplitudenspektrum zu jedem Wasserfahrzeug automatisch bestimmt, wobei sich ein zielbezogenes Frequenzlinienmuster aus einem oder mehreren Frequenzliniensätzen sowie evtl. vorhandenen Einzellinien zusammensetzt.

Zum automatischen Bestimmen der Frequenzliniensätze im Amplitudenspektrum werden eine vorbestimmte Anzahl der stärksten Frequenzlinien aus dem Amplitudenspektrum bestimmt und miteinander verglichen, um sog. Linienpaare zu bilden, wobei die Frequenzen von harmonischen Linienpaaren als Kandidaten für Frequenzliniensätze betrachtet werden. Dadurch wird vorteilhaft sichergestellt, dass alle Frequenzliniensätze erfasst werden.

Dabei wird ein Linienpaar gebildet, wenn entweder die Frequenz der ersten Frequenzlinie ein Mehrfaches der Frequenz der zweiten Frequenzlinie ist oder die Frequenzen der beiden zu vergleichenden Frequenzen ein Mehrfaches des Betrags der Frequenzdifferenz der beiden Frequenzen der zu vergleichenden Frequenzlinien ist.

Werden die Frequenzen durch besondere Merkmale bestätigt, werden vorläufige Frequenzliniensätze gebildet. Besondere Merkmale von Frequenzliniensätzen sind insbesondere die Anzahl der Frequenzlinien, Sequenzen von Frequenzlinien, besonders hohe Amplituden der Frequenzlinien, die Grundfrequenz sowie die Liniendichte. Nach einem Vergleich der vorläufigen Frequenzliniensätze mittels einer Bewertungsfunktion, welche auf den besonderen Merkmalen basiert, werden die endgültigen Frequenzliniensätze bestimmt, wobei abhängige Frequenzliniensätze wie z.B. Frequenzliniensätze mit Vielfachen der Grundfrequenz ausgeschlossen werden.

Nach dem Ermitteln aller Frequenzliniensätze lassen sich dann evtl. vorhandene Einzellinien im Amplitudenspektrum finden. Das sind dann alle Frequenzlinien, die nicht zu einem Frequenzliniensatz gehören, eine hinreichend große Amplitude besitzen, oberhalb einer Mindestfrequenz liegen und nicht durch Eigengeräusche verursacht sind. Dazu werden mittels vorbestimmter Schwellenwerte die möglichen Einzellinien im Amplitudenspektrum automatisch bestimmt und mit den Frequenzliniensätzen zu einem zielbezogenen Frequenzlinienmuster zusammengefasst. Die Erfindung ist jedoch nicht auf die vorstehend beschriebene automatische Bestimmung der Frequenzliniensätze beschränkt. Vielmehr sind jedwede Verfahren zur automatischen Linienmustererkennung denkbar.

Anhand des Frequenzlinienmusters können vorteilhaft Merkmale eines Wasserfahrzeugs abgeleitet werden. Zu jedem bestimmten Frequenzlinienmuster werden charakteristische Fahrzeugparameter angegeben. Dazu zählen neben den Motor-Parametern, Getriebe-Parametern und/oder Propeller-Parametern auch besonders auffällige Frequenzlinien. Die derart automatisch bestimmten charakteristischen Fahrzeugparameter werden vorteilhafterweise für den Vergleich mit vorhandenen Parametern der Datenbank herangezogen, um das zugehörige Fahrzeug zu klassifizieren.

Die automatische Klassifizierung ermöglicht vorteilhaft ein regelmäßiges Abtasten der Geräuschquellen aller detektierten Fahrzeuge. Da ein Bediener vielfältige Aufgaben zu erledigen hat, insbesondere bzgl. der Detektion mittels verschiedener Sensoren, Track Management und Lageerarbeitung, bleibt in Mehr-Kontaktsituationen häufig nicht genügend Zeit für eine manuelle Klassifizierung aller detektierten Fahrzeuge. Insofern wird der Bediener entlastet. Außerdem wird durch eine automatische Klassifizierung der Klassifizierungsprozess beschleunigt. Falls für ein detektiertes Fahrzeug signifikante Klassifizierungsmerkmale vorliegen und erkennbar sind, kann durch die automatische Klassifizierung das Klassifizierungsergebnis kurze Zeit nach der Detektion mitgeteilt werden ohne Eingabe des Bedieners.

In einer weiteren Ausführungsform der Erfindung werden für den Vergleich der charakteristischen Fahrzeugparameter mit den Parametern der Datenbank die Parameter selbst, die zugehörigen Frequenzen bzw. Frequenzwerte und/oder Quotienten aus zugehörigen Parameterwerten herangezogen. Das ist besonders vorteilhaft, wenn unbekannt ist, ob eine bestimmte Frequenzlinie drehzahlabhängig ist oder nicht. Daher wird in erster Linie nicht nach Geräte-Merkmalen gesucht, sondern nach Frequenzen und entsprechenden Quotienten. Ist eine Gerätezuordnung jedoch bekannt, wird diese auch berücksichtigt.

Gemäß einer weiteren bevorzugten Ausführungsform der Erfindung wird der Übereinstimmungsfaktor anhand von Bewertungsklassen ermittelt. Bevorzugt werden die zu vergleichenden Parameter für die Bewertung verschieden gewichtet und einer dieser Bewertungsklassen zugewiesen, so dass die Bewertungsklassen bspw. unterteilt werden in Übereinstimmung mit den verschiedenen Gewichtungen, keine Übereinstimmung bzw. Abweichung mit den verschiedenen Gewichtungen sowie nicht vorhandene Parameter. Ferner erhält jede Bewertungsklasse einen Faktor, mit dem diese Bewertungsklasse bei der Ermittlung des Übereinstimmungsfaktors in die Berechnung eingeht. Das hat den Vorteil, dass einflussreiche Parameter bei der Klassifizierung stärker berücksichtigt werden als andere, weniger aussagekräftige Parameter.

Gemäß einer weiteren Ausführungsform der Erfindung werden die ermittelten charakteristischen Fahrzeugparameter zu einem Parametersatz zusammengefasst. Der Vergleich der charakteristischen Fahrzeugparameter mit den Parametern der Datenbank erfolgt dann satzweise. D.h. die Parameter der Datenbank sind ebenfalls zu Parametersätzen zusammengefasst, wobei vorteilhaft jedem bekannten Fahrzeugtyp ein Parametersatz zugeordnet ist. In dem Datenbankvergleichsmodul wird der Parametersatz der ermittelten charakteristischen Fahrzeugparameter mit den vorhandenen Parametersätzen der Datenbank verglichen, um anhand einer besten Übereinstimmung vorteilhaft eine Klassifizierung des Fahrzeugs vornehmen zu können.

In einer weiteren Ausführungsform der Erfindung werden für die Ermittlung des Übereinstimmungsfaktors weitere Messdaten und/oder Eingabewerte berücksichtigt. Dazu weist das Bewertungsmodul eine entsprechende Eingabeschnittstelle für die Messdaten bzw. die Eingabewerte auf. Das hat den Vorteil, das Messdaten oder Teilergebnisse anderer Sensoren, wie bspw. Aktiv-Sonar, elektronische Signaturen aus Fremdradargeräten, Daten aus einem automatischen Identifikationssystem etc., berücksichtigt werden. Ferner ist es vorteilhaft möglich manuelle Bediener-Eingaben zu berücksichtigen.

In einer weiteren bevorzugten Ausführungsform der Erfindung wird das Verfahren zum Klassifizieren eines oder mehrerer Wasserfahrzeuge wiederholt durchgeführt, insbesondere automatisch und/oder zyklisch, wobei zugehörige Klassifizierungsergebnisse in einer Historie abgelegt oder gespeichert werden. Bevorzugt erfolgt nach einem ersten Verfahrensdurchlauf die Klassifizierung jedes weiteren Verfahrensdurchlaufes unter Berücksichtigung der vorhergehenden Klassifizierungsergebnisse. Die Berücksichtigung erfolgt insbesondere mittels Korrelation des aktuellen Klassifizierungsergebnisses mit weiteren Klassifizierungsergebnissen der Historie. Dies ermöglicht vorteilhaft eine Verfeinerung des Klassifizierungsergebnisses.

Gemäß einer weiteren bevorzugten Ausführungsform der Erfindung wird bei der Klassifizierung eines oder mehrer Wasserfahrzeuge wenigstens eine Einschränkung bei einem erneuten Verfahrensdurchlauf vorgenommen, indem bei dem Vergleich der charakteristischen Fahrzeugparametern mit den Parametern der Datenbank ein oder mehrere Fahrzeugmerkmale aus dem vorhergehenden Verfahrensdurchlauf oder den vorhergehenden Verfahrensdurchläufen berücksichtigt werden. Dies ermöglicht ebenfalls vorteilhaft eine Verfeinerung des Klassifizierungsergebnisses.

Gemäß einer alternativen Ausführungsform der Erfindung weist die erfindungsgemäße Vorrichtung ein oder mehrere Mittel zum Durchführen des vorstehend beschriebenen Verfahrens auf.

Weitere vorteilhafte Ausführungsformen der Erfindung ergeben sich aus den Unteransprüchen sowie aus den anhand der Zeichnung näher erläuterten Ausführungsbeispielen. In der Zeichnung zeigen:
- Fig. 1: eine schematische Darstellung eines Ablaufdiagramms des erfindungsgemäßen Verfahrens,
- Fig. 2: eine beispielhafte Darstellung eines DEMON-Spektrums und
- Fig. 3: eine beispielhafte Darstellung eines LOFAR-Spektrums.

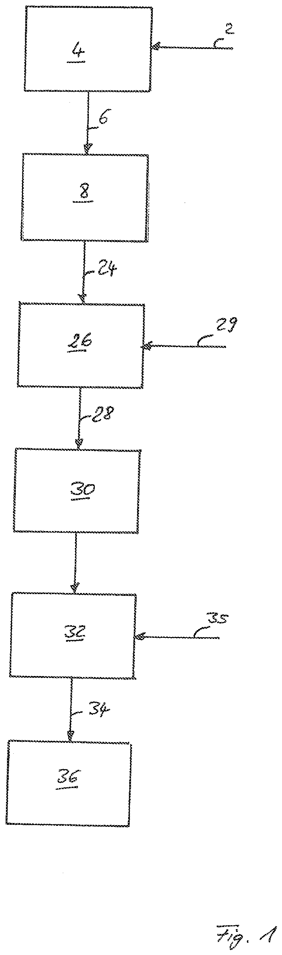

Fig. 1 zeigt eine schematische Darstellung eines Ablaufdiagramms eines Ausführungsbeispiels des erfindungsgemäßen Verfahrens, wobei vorausgesetzt wird, dass ein Wasserfahrzeug detektiert wurde, dessen abgestrahlten und/oder gesendeten Schallwellen 2 von einer Sonar-Empfangsanlage 4 empfangen und daraus zugehörige Empfangssignale 6 erzeugt werden.

Das Empfangssignal 6 wird einem Frequenzanalysemodul 8 übergeben, welches derart ausgestaltet ist, um wenigstens eine Frequenzanalyse zum Erzeugen eines Frequenzspektrums durchzuführen.

Das Frequenzspektrum des Empfangssignals 6 der Sonar-Empfangsanlage 4 wird durch Anwendung bspw. einer Fourier-Transformation berechnet und setzt sich aus dem Betrag, auch als Amplitudenspektrum bezeichnet, und der Phase, auch als Phasenspektrum bezeichnet, zusammen. Für die Durchführung des erfindungsgemäßen Verfahrens wird das Amplitudenspektrum oder ein aus dem Amplitudenspektrum abgeleitetes Spektrum des Empfangssignals 6 betrachtet.

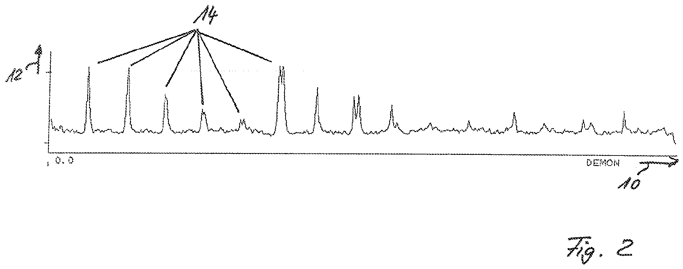

Fig. 2 zeigt eine beispielhafte Darstellung eines DEMON-Spektrums, wobei das Spektrum über eine Frequenz auf einer horizontalen Achse 10 aufgetragen ist und die zugehörigen Frequenzamplituden auf einer vertikalen Achse 12 dargestellt sind. Anhand des dargestellten DEMON-Spektrums lassen sich mehrere signifikante Frequenzlinien 14 erkennen, aus denen ein Frequenzlinienmuster abgeleitet werden kann, welches zugehörige Propellerinformationen enthält.

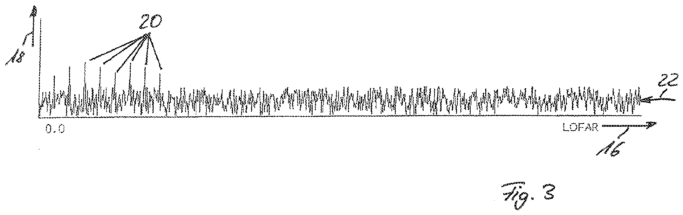

Fig. 3 zeigt eine beispielhafte Darstellung eines LOFAR-Spektrums, bei dem ebenfalls das Spektrum über eine Frequenz auf einer horizontalen Achse 16 aufgetragen ist und die zugehörigen Frequenzamplituden auf einer vertikalen Achse 18 dargestellt sind. Auch in diesem Ausführungsbeispiel sind mehrere Frequenzlinien 20 erkennbar, die aus einem allgemeinen Rauschpegel 22 hinausragen. Anhand des LOFAR-Spektrums lassen sich Geräuschquellen, wie Dieselmotoren, Turbinen, Generatoren, Pumpen und/oder Lüfter, bestimmen.

Entsprechend dem erfindungsgemäßen Verfahren aus Fig. 1 wird von dem Frequenzanalysemodul 8 bevorzugt jeweils ein DEMON-Spektrum und ein LOFAR-Spektrum erzeugt, um Informationen sämtlicher Geräuschquellen an Bord des zu klassifizierenden Fahrzeugs zu erfassen.

Die DEMON- und LOFAR-Spektren werden als Eingangsdaten 24 einem Frequenzlinienmustererkennungsmodul 26 übergeben, wobei bevorzugt auffällige Frequenzlinien, die aufgrund von Geräuschquellen des Eigenbootes erzeugt werden, als Eigenfrequenzlinien gekennzeichnet und von dem erfindungsgemäßen Verfahren berücksichtigt werden. Darüber hinaus wird die Verwendbarkeit der gemessenen Frequenzamplituden, d.h. die Reihenfolge der nach der Amplitude sortierten Frequenzen sowie die Verhältnisse der Amplituden, geprüft.

Zu jedem zu klassifizierenden Fahrzeug werden die Amplitudenspektren 24 des Frequenzanalysemoduls 8 ausgewertet. Die Auswertung der Amplitudenspektren 24 erfolgt durch eine automatische Frequenzlinienmustererkennung innerhalb des Frequenzlinienmustererkennungsmoduls 26. Alternativ oder ergänzend kann die Auswertung aufgrund der ausgegebenen Spektren 24 des Frequenzanalysemoduls 8 manuell von einem Bediener erfolgen. Manuelle Eingaben mit graphischen Hilfsmitteln, wie bspw. einem Multi-Point-Divider (Mehrpunktteilereinrichtung), werden bevorzugt berücksichtigt.

Ferner werden aufgrund des Frequenzlinienmusters charakteristische Fahrzeugparameter 28 ermittelt. Ein Frequenzliniensatz mit Frequenzlinien als Grundfrequenz und Harmonische dieser Grundfrequenz eines DEMON-Spektrums gibt z.B. Propellerinformationen an, wie bspw. Propellerwellendrehfrequenz (PSR=Propeller Shaft Rate), Propellerblattzahl (NOB=Number of Blades), Anzahl der Propellerwellen (NOS=Number of Shafts) und/oder Propellerblattfrequenz (BLR=Blade Rate).

Aus einem LOFAR-Spektrum lassen sich Motorinformationen anhand der bestimmten Frequenzliniensätze ermitteln. Zu den charakteristischen Motor-Fahrzeugparametern zählen bspw. Zylinderzündfrequenz (CR=Cylinder Rate), Kurbelwellendrehfrequenz (CSR=Crank Shaft Rate), Motorzündfrequenz (EFR=Engine Firing Rate) und/oder Anzahl der Zylinder (NOC=Number of Cylinders).

Sind in dem LOFAR-Spektrum mehrere Frequenzliniensätze mit Frequenzlinien einer Grundfrequenz und ihren Harmonischen vorhanden, weist dies auf weitere Maschinen wie bspw. Turbinen, Generatoren, Pumpen, Lüfter hin, die ebenfalls unter den Frequenzliniensätzen ein charakteristisches Muster erzeugen. So lassen sich aus dem LOFAR-Spektrum weitere charakteristische Fahrzeugparameter 28 ableiten.

Ferner ist es möglich, dem Frequenzlinienmustererkennungsmodul 26 externe Werte 29, bspw. durch Bedienereingriff, zu übergeben, welche für die Bestimmung der charakteristischen Fahrzeugparameter 28 berücksichtigt werden sollen.

Bevorzugt werden ferner manuell und/oder mittels der automatischen Frequenzlinienmustererkennung innerhalb des LOFAR-Spektrums Einzellinien bestimmt, welche ebenfalls ein charakteristisches Merkmal eines Fahrzeugs darstellen und als charakteristische Fahrzeugparameter 28 abgelegt werden. Die charakteristischen Fahrzeugparameter 28 werden dann einem Datenbankvergleichsmodul 30 übergeben.

In dem Datenbankvergleichsmodul 30 werden die Werte der charakteristischen Fahrzeugparameter 28 mit vorhandenen Parameterwerten der Datenbank verglichen. Für den Vergleich werden die charakteristischen Fahrzeugparameter 28 zu einem Parametersatz zusammengefasst. Die Datenbank weist ebenfalls eine Vielzahl von Parametersätzen auf, in denen eine Mehrzahl an Parametern abgelegt ist, die charakteristisch für einzelne Fahrzeugtypen sind.

Jedem bekannten Fahrzeugtyp wird in der Datenbank ein Parametersatz zugewiesen. So lassen sich Wasserfahrzeuge bspw. grob in Schiffstypen je nach Größe, Bauweise, Antriebsart und Verwendungszweck, insbesondere nach Fracht-, Kriegs-, Passagierschiff oder Freizeitboot, unterteilen. Durch eine derartige Grob-Klassifizierung erhält der Bediener vorteilhaft eine Unterstützung, um sich auf wichtigste Aufgaben konzentrieren zu können.

Umfasst die zur Verfügung stehende Datenbank detaillierte Parametersätze, lassen sich die Schiffstypen in weitere Untertypen unterteilen, die jeweilige Einsatzbereiche spezifizieren. Dadurch wird vorteilhaft ein Einsatz des erfindungsgemäßen Verfahrens ohne Bedienereingriff ermöglicht.

Verfügt die Datenbank über eine temporäre Datenbank, welche im laufenden Betrieb mit neuen Fahrzeugen oder neuen Fahrzeug-Parametern gefüllt werden kann, so lassen sich neue Fahrzeuge oder bestehende Fahrzeug-Parametersätze der Grunddatenbank mit zusätzlichen charakteristischen Parametern ergänzen. Die Datenbank kann somit vorteilhaft an unterschiedliche Bedürfnisse und an verschiedene Einsatzbereiche angepasst werden.

Bei dem Vergleich der Werte der charakteristischen Fahrzeugparameter 28 mit vorhandenen Parameterwerten der Datenbank werden die Parametersätze verglichen und der Grad der Übereinstimmung ermittelt. Dabei gehen die Parameter entsprechend ihrer Signifikanz in die Bewertung ein. Die Anzahl der Parameter wie auch die Parameter selbst müssen nicht zwingend in beiden zu vergleichenden Parametersätzen gleich sein. Nicht gefundene bzw. nicht vorhandene Werte einzelner charakteristischer Parameter sind kein Ausschlusskriterium, wohl aber eine Abweichung bei sehr signifikanten Parametern wie z.B. der Blattzahl. Anhand der gemäß dem Übereinstimmungsgrad sortierten Liste der Fahrzeuge der Datenbank und einer Rückmeldung bzgl. der Übereinstimmung der einzelnen Parameter kann der Bediener das Klassifizierungsergebnis abschließend bewerten oder auch, wenn notwendig, nachträglich verbessern.

Zu den charakteristischen Fahrzeugparametern 28 gehören jedoch nicht nur die direkt ermittelten Werte für Propeller-, Motor- und/oder Getriebeinformationen sondern auch Quotienten einzelner Werte, insbesondere Quotienten aus Grundfrequenzen von harmonischen LOFAR-Frequenzliniensätzen und Grundfrequenzen von harmonischen DEMON-Frequenzliniensätzen. So gibt bspw. der Quotient aus Kurbelwellendrehfrequenz und Propellerwellendrehfrequenz (CSR/PSR) ein Untersetzungsverhältnis (RR=Reduction Ratio) von Antriebswellendrehfrequenz zu Propellerwellendrehfrequenz an, welches einen wichtigen, signifikanten Fahrzeugparameter darstellt. Aber auch andere Quotienten von maschinenbezogenen harmonischen Grundfrequenzen und propellerbezogenen harmonischen Grundfrequenzen (EFR/PSR, CR/BLR, und/oder EFR/BLR) sind signifikante Fahrzeugparameter, die in dem hier beschriebenen Verfahren vorteilhaft berücksichtigt werden.

Einen weiteren Fahrzeugparameter stellen die Umdrehungen pro Knoten (TPK=Turns Per Knots) dar, deren Werte für verschiedene Fahrstufen des Wasserfahrzeugs in der Datenbank abgelegt sind. Voraussetzung für die Verwendung dieses Parameters für den Vergleich mit der Datenbank ist jedoch, dass die Propellerwellendrehfrequenz und die Geschwindigkeit des zu klassifizierenden Fahrzeugs bekannt sind. Informationen über die Geschwindigkeit lassen sich bspw. durch weitere Sensoren oder Verfahren, z.B. Target Motion Analysis, erhalten.

Bei der Berücksichtigung der Einzellinien des LOFAR-Spektrums in einem Parametersatz zum Vergleichen der charakteristischen Fahrzeugparameter 28 mit den Parametern der Datenbank wird unterschieden, ob die zugehörige Geräuschquelle bekannt oder unbekannt ist.

Ist die Geräuschquelle der zugehörigen Einzellinie bekannt, wird diese Information bei einem Vergleich berücksichtigt. Handelt es sich bei der Einzellinie um eine drehzahlunabhängige Frequenzlinie, wird deren Frequenz absolut mit der entsprechenden Frequenz des zugehörigen Datenbankeintrags verglichen.

Handelt es sich bei der Einzellinie hingegen um eine drehzahlabhängige Frequenzlinie, werden Quotienten aus dieser Frequenz und den Frequenzen weiterer drehzahlabhängiger Frequenzlinien verglichen, wie bspw. Getriebefrequenz/ Propellerwellendrehfrequenz (G=Gear Line/PSR=Propeller Shaft Rate).

Ist die Geräuschquelle der zugehörigen Einzellinie hingegen nicht bekannt, wird die Frequenz dieser Einzellinie absolut mit den Frequenzwerten der Datenbank verglichen. Ferner wird diese Frequenz als Quotient relativ zu den zu diesem Fahrzeug ermittelten harmonischen Frequenzen eines Frequenzliniensatzes mit den Werten der Datenbank verglichen, wie bspw. das Verhältnis aus der Frequenz zur Propellerwellendrehfrequenz (f/PSR). Erfindungsgemäß werden die Quotienten der Frequenzen der stärksten Einzellinien betrachtet und mit den Quotienten der Frequenzen der in der Datenbank gespeicherten Einzellinien verglichen. Dabei ist die Anzahl der zu betrachtenden Einzellinien vorbestimmt oder kann zu Beginn des Verfahrens festgelegt werden.

Bei einem Vergleich des ermittelten Parametersatzes der charakteristischen Fahrzeugparameter 28 mit den Parametersätzen der Datenbank wird dieser Vergleich von einem Bewertungsmodul 32 entsprechend bewertet und ein zugehöriger Übereinstimmungsfaktor 34 ermittelt. Dabei werden die Parameter verschieden gewichtet, da der Einfluss einiger Parameter bei der Klassifizierung der Fahrzeuge größer ist als bei anderen Parametern.

So wird bspw. von einer geringen Gewichtung, einer mittleren Gewichtung und einer hohen Gewichtung des Parameters bei der Klassifizierung bzw. der Ermittlung des Übereinstimmungsfaktors 34 ausgegangen. Die Erfindung ist jedoch nicht auf die oben genannten drei Gewichtungen beschränkt. Vielmehr sind beliebige Anzahlen an verschiedenen Gewichtungen der Parameter bei der Klassifizierung denkbar.

Die Bewertung der zu vergleichenden Parameter erfolgt unterteilt in Bewertungsklassen. Dabei wird unterschieden zwischen Übereinstimmungen mit den verschiedenen Gewichtungen, keine Übereinstimmungen bzw. Abweichungen mit den verschiedenen Gewichtungen sowie nicht vorhandene Parameter, d.h. zu dem ermittelten charakteristischen Fahrzeugparameter befindet sich kein Eintrag in der Datenbank bzw. ein zu dem ermittelten Schiffstyp des zugehörigen Fahrzeugs zugehöriger Parameter wurde nicht als charakteristischer Fahrzeugparameter gemessen bzw. bestimmt. Jede Bewertungsklasse erhält einen Faktor, mit dem diese Bewertungsklasse bei der Ermittlung eines Übereinstimmungsfaktors 34 in die Berechnung eingeht.

Jedem Vergleich eines Parametersatzes aus charakteristischen Fahrzeugparametern wird dann ein Übereinstimmungsfaktor zugeordnet, dessen Wertebereich von Null bis 1 bzw. von sehr unsicher bis sehr sicher verläuft und eine Zuverlässigkeit zu der zugehörigen Klassifizierung liefert.

Für die Ermittlung des Übereinstimmungsfaktors 34 werden die Anzahlen der Übereinstimmungen und Abweichungen je Bewertungsklasse der einzelnen Parameter der zu vergleichenden Parametersätze gezählt. Bspw. wird gezählt, wie viele Übereinstimmungen unter den Parametern mit einer hohen Gewichtung vorliegen, wie viele Übereinstimmungen unter den Parametern mit einer mittleren Gewichtung, wie viele Übereinstimmungen mit einer geringen Gewichtung, wie viele Abweichungen mit geringer Gewichtung, wie viele Abweichungen mit mittlerer Gewichtung und wie viele Abweichungen mit hoher Gewichtung vorliegen. Die Abfrage zur Übereinstimmung erfolgt dabei in einem Toleranzbereich, welcher parameterabhängig festgelegt wird.

So erhalten bspw. die Parameter für die Propellerwellendrehfrequenz (PSR), Propellerblattfrequenz (BLR), Zylinderzündfrequenz (CR) und Motorzündfrequenz (EFR) bei einem Vergleich mit den entsprechenden Parametern der Datenbank für verschiedene Fahrstufen des Wasserfahrzeugs sowohl für eine Übereinstimmung als auch für eine Abweichung lediglich eine geringe Gewichtung bei der Ermittlung des Übereinstimmungsfaktors 34. Der Parameter für die Umdrehungen pro Knoten (TPK) geht hingegen mit einer mittleren Gewichtung in die Ermittlung des Übereinstimmungsfaktors 34 ein.

Die Gewichtung kann für eine Übereinstimmung anders ausfallen als bei einer Abweichung. Die Propellerblattzahl (NOB), Anzahl der Propellerwellen (NOS) und Anzahl der Zylinder (NOC) gehen bspw. mit einer mittleren Gewichtung bei einer Übereinstimmung in die Ermittlung des Übereinstimmungsfaktors 34 ein. Eine Abweichung hingegen wirkt sich stark einschränkend durch eine hohe Gewichtung bei der Ermittlung des Übereinstimmungsfaktors 34 aus.

Bei der Betrachtung der Einzellinien im Amplitudenspektrum gehen die absoluten Frequenzen der ermittelten Einzellinien bei unbekannten Geräuschquellen ebenfalls mit einer mittleren Gewichtung in die Bestimmung des Übereinstimmungsfaktors 34 ein, da diese Frequenzen möglicherweise drehzahlabhängig sein können. Sind zu der Propellerwellendrehfrequenz (PSR), Propellerblattfrequenz (BLR), Zylinderzündfrequenz (CR) und/oder der Motorzündfrequenz (EFR) Harmonische aus den Frequenzliniensätzen bekannt, so geht die Frequenz einer gemessenen Einzellinie als Quotient mit der Frequenz einer der Harmonischen mit einer mittleren Gewichtung in die Bestimmung des Übereinstimmungsfaktors 34 ein, da diese Frequenz ebenfalls drehzahlabhängig sein kann. Ferner ist es möglich den Quotienten aus der Frequenz der gemessenen Einzellinie mit der Frequenz einer der stärksten Einzellinien des zugehörigen Datenbankeintrags für die Bestimmung des Übereinstimmungsfaktors 34 zu berücksichtigen.

Der Vergleich der Quotienten der harmonischen Frequenzen aus Motorgröße und Propellergröße, wie bspw. der Quotient aus Kurbelwellendrehfrequenz zu der Propellerwellendrehfrequenz (CSR/PSR), welcher das Untersetzungsverhältnis (RR) als wichtige, signifikante Kenngröße angibt, geht mit einer hohen Gewichtung in die Bestimmung des Übereinstimmungsfaktors 34 ein.

Ebenso gehen diejenigen Einzellinien, deren zugehörige Geräuschquellen bekannt sind, sowohl als absolute Frequenzen als auch als relative Frequenzen aus Harmonischen aus bekannten Frequenzlinienmustersätzen mit einer hohen Gewichtung in die Bestimmung des Übereinstimmungsfaktors ein.

Der Übereinstimmungsfaktor 34 ist somit abhängig von den einzelnen charakteristischen Fahrzeugparametern 28, die zur Klassifizierung herangezogen werden. Die Erfindung ist jedoch nicht auf die vorstehend beschriebene Parametergewichtung beschränkt. Die Zuordnung bzgl. einer hohen, mittleren und geringen Gewichtung ist modifizierbar. Es lassen sich je nach Bedarf die Parameter verschiedenen Bewertungsklassen zuordnen und die Gewichtung je nach Bedarf anpassen.

Die vorstehend beschriebene Bewertung des Vergleichs beruht auf den charakteristischen Fahrzeugparametern 28, die aufgrund von Messergebnissen einer Passiv-Sonaranlage ermittelt wurden. Alternativ können jedoch zur Bestimmung des Übereinstimmungsfaktors 34 neben einer Eingabe eines Bedieners 35 auch vorhandene Messdaten aus weiteren Sensoren 35, wie bspw. Aktiv-Sonar, sowie Teilergebnisse weiterer Systeme 35, wie bspw. elektronische Signaturen von Fremdradarsystemen und/oder Daten eines automatischen Identifikationssystems, berücksichtigt werden. Das erfindungsgemäße Verfahren tauscht Informationen mit der Systemumgebung aus, insbesondere Daten aus Zielspurermittlungs-Verfahren (Tracking-Verfahren) oder Ziel-Bewegungsanalysen (Target Motion Analysis), wie bspw. Ziel-CPA (Closest Point of Approach = Punkt des kleinsten Abstandes), Ziel-Bewegungsparameter und/oder Zielkreuzungssituationen.

Die Ergebnisse der Vergleiche des Parametersatzes der charakteristischen Fahrzeugdaten 28 mit den Parametersätzen der Datenbank werden zusammen mit den zu diesen Vergleichen ermittelten Übereinstimmungsfaktoren 34 einem Auswertemodul 36 übergeben. Es werden die Ergebnisse entsprechend aufgearbeitet, um auf einem Ausgabemittel, insbesondere einem Anzeigefenster, eine Liste von Klassifizierungen, wie z.B. Schiffstypen, zu dem detektierten Wasserfahrzeug jeweils mit dem zugehörigen Übereinstimmungsfaktor 34 darzustellen. Die in der Liste angezeigten Klassifizierungen können dabei verschieden sortiert werden, bspw. nach Größe des Übereinstimmungsfaktors 34 oder zugehöriger Ländererkennung des Fahrzeugs. Optional ist eine Anzeige der einzelnen Parameterabfragen möglich. Der Klassifizierungsprozess erfolgt dabei einerseits in der aktuellen Zeit, so dass ein temporäres Ergebnis ermittelt wird, und andererseits aber auch über einen vorbestimmten Zeitabschnitt, so dass sich ein Gesamtergebnis über die Zeit ergibt. Insbesondere können signifikante Frequenzänderungen, z.B. infolge einer geänderten Zielgeschwindigkeit einen wesentlichen Einfluss auf das Gesamt-Klassifizierungsergebnis haben.

Ferner erfolgt der Klassifizierungsprozess automatisch, zyklisch und/oder kontinuierlich, wobei ein automatischer Klassifizierungsprozess ein Verfahren ohne Bedienereingriff bezeichnet, ein zyklischer Klassifizierungsprozess einen periodisch wiederkehrenden Verfahrensdurchlauf bezeichnet, bspw. nach erneut empfangenen Empfangssignalen eines Wasserfahrzeugs, und ein kontinuierlicher Klassifizierungsprozess eine fortlaufende erneute Durchführung des erfindungsgemäßen Verfahrens ohne Unterbrechung bezeichnet.

Bevorzugt wird das Klassifizierungsergebnis nach jedem Verfahrensdurchlauf überprüft, indem eine Korrelation des Ergebnisses auf der Basis der aktuellen Eingangsdaten mit den zuvor ermittelten Ergebnissen durchgeführt wird. Durch die Berücksichtigung einer Historie der Klassifizierungsergebnisse können die jeweiligen Klassifizierungsergebnisse vorteilhaft verfeinert werden.

Ferner lässt sich das sehr grobe Klassifizierungsergebnis nach dem ersten Durchlauf des erfindungsgemäßen Verfahrens verfeinern, indem bei einem erneuten Verfahrensdurchlauf Einschränkungen vorgenommen werden. Bspw. lässt sich bei dem Vergleich der charakteristischen Fahrzeugparameter mit den Parametern der Datenbank nach gezielten Merkmalen unter Berücksichtigung der Datenbankparameter suchen.

Bevorzugt erhält der Bediener über das Anzeigemittel eine entsprechende Meldung, um die automatisch ermittelten Messdaten zu überprüfen und evtl. Einfluss zu nehmen auf das Ergebnis. Ferner eignet sich das erfindungsgemäße Verfahren als Hintergrundprozess für eine Überwachung einer Mehrzahl detektierter Fahrzeuge, da mittels des Verfahrens umgehend Drehzahländerungen und/oder neue Klassifizierungsergebnisse gemeldet werden können.

Vorzugsweise werden die ermittelten Frequenzlinienmuster mittels des erfindungsgemäßen Verfahrens direkt interpretiert. Dabei erfolgt die Interpretation teilweise im Rahmen der automatischen Linienmustererkennung in dem Frequenzlinienmustererkennungsmodul 26 oder innerhalb des Klassifizierungsprozesses mittels Regeln oder Datenbank-Informationen. So können bspw. bestimmte Frequenzen aufgrund von Datenbank-Informationen und Linienmerkmale aufgrund von Regeln bestimmten Geräten zugeordnet werden. Ferner können auch besondere Linienstrukturen direkt bestimmten Schiffsklassen zugeordnet werden.

Mit einer angepassten Parametrisierung ist auch ein Einsatz des erfindungsgemäßen Verfahrens ohne Bediener-Kontrolle möglich, wodurch ein Einsatz auf unbemannte Anlagen, wie bspw. Küstenüberwachung, Sonar-Bojen, Klein-U-Boote etc., ermöglicht wird.

Eine weitere Ausführungsform der Erfindung sieht eine sukzessive Ergebnisoptimierung durch Variation von Toleranzfenstern vor. Insbesondere wird eine automatische Frequenzfokussierung durchgeführt, indem beim Datenbankvergleich Frequenz-Toleranzfenster unterschiedlicher Größe getestet werden und die Ergebnisse bewertet werden, wobei die Frequenz-Toleranzfenster bspw. einen Dopplereffekt oder eine Messungenauigkeit berücksichtigen. Bevorzugt erfolgt die automatische Auswahl der Toleranzfenster datenbankabhängig. Um die Menge der möglichen Schiffsklassen bei der Klassifizierung einzuschränken, wird bspw. das Doppler-Toleranzfenster datenbankabhängig reduziert. Die Ergebnisoptimierung erfolgt dann durch eine sukzessive Anpassung der Toleranzfenster und durch Vergleich der zugehörigen Ergebnisbewertung.

## Patentansprüche

1. Verfahren zum Klassifizieren eines oder mehrerer Wasserfahrzeuge anhand der von diesen Fahrzeugen abgestrahlten oder gesendeten Schallwellen (2), welche mit einer Anordnung von Wasserschallaufnehmern einer Sonar-Empfangsanlage (4) empfangen und zu Empfangssignalen (6) verarbeitet werden, wobei aus den Empfangssignalen (6) wenigstens ein Amplitudenspektrum (24) erzeugt wird,
charakteristische Fahrzeugparameter (28) anhand der in dem Amplitudenspektrum (24) enthaltenen Frequenzliniensätzen und vorhandenen Einzellinien ermittelt werden,
Werte der charakteristischen Fahrzeugparameter (28) mit vorhandenen Parameterwerten einer Datenbank verglichen werden,
aus dem Vergleich der charakteristischen Fahrzeugparameter (28) mit den Parametern der Datenbank ein zugehöriger Übereinstimmungsfaktor (34) ermittelt wird und das wenigstens eine Wasserfahrzeug anhand des Übereinstimmungsfaktors (34) klassifiziert wird
**dadurch gekennzeichnet, dass**
zum Vergleichen der charakteristischen Fahrzeugparameter mit den Parametern der Datenbank Quotienten aus den stärksten Einzellinien mit Quotienten aus den Frequenzen der vorhandenen Parameterwerte für Einzellinien der Datenbank verglichen werden.

2. Verfahren nach Anspruch 1,
**dadurch gekennzeichnet, dass**
das Amplitudenspektrum (24) mittels einer DEMON-Analyse oder einer LOFAR-Analyse ermittelt wird, wobei das Amplitudenspektrum (24) über einen vorbestimmten Zeitabschnitt gemittelt und normiert wird.

3. Verfahren nach Anspruch 1 oder 2,
**dadurch gekennzeichnet, dass**
die Frequenzliniensätze und vorhandene Einzellinien im Amplitudenspektrum (24) zu jedem Wasserfahrzeug automatisch bestimmt werden.

4. Verfahren nach einem der vorhergehenden Ansprüche,
**dadurch gekennzeichnet, dass**
für den Vergleich der charakteristischen Fahrzeugparameter (28) mit den Parametern der Datenbank die Parameter selbst, die zugehörigen Frequenzen und/oder einzelne Quotienten aus zugehörigen Parameterwerten herangezogen werden, insbesondere Quotienten aus Grundfrequenzen von harmonischen Frequenzliniensätzen.

5. Verfahren nach einem der vorhergehenden Ansprüche,
**dadurch gekennzeichnet, dass**
der Übereinstimmungsfaktor (34) anhand von Bewertungsklassen ermittelt wird und jeder zu vergleichende Parameter einer dieser Bewertungsklassen zugewiesen wird, wobei die Bewertungsklassen mit jeweils einem zugehörigen Faktor in die Ermittlung des Übereinstimmungsfaktors (34) eingehen.

6. Verfahren nach einem der vorhergehenden Ansprüche,
**dadurch gekennzeichnet, dass**
die ermittelten charakteristischen Fahrzeugparameter (28) zu einem Parametersatz je Wasserfahrzeug zusammengefasst werden und der Vergleich der charakteristischen Fahrzeugparameter (28) mit den Parametern der Datenbank satzweise erfolgt.

7. Verfahren nach einem der vorhergehenden Ansprüche,
**dadurch gekennzeichnet, dass**
für die Ermittlung des Übereinstimmungsfaktors (34) weitere Messdaten (35) und/oder Eingabewerte (35) berücksichtigt werden.

8. Verfahren nach einem der vorhergehenden Ansprüche,
**dadurch gekennzeichnet, dass**
das Verfahren zum Klassifizieren wiederholt, insbesondere zyklisch wiederholt, durchgeführt wird, wobei ein Klassifizierungsergebnis zu jedem Verfahrensdurchlauf abgelegt wird, und die Klassifizierung unter Berücksichtigung, insbesondere durch Korrelation, vorhergehender Klassifizierungsergebnisse verfeinert wird.

9. Vorrichtung zur Klassifizierung eines oder mehrerer Wasserfahrzeuge anhand der von diesen Fahrzeugen abgestrahlten oder gesendeten Schallwellen (2), welche mit einer Anordnung von Wasserschallaufnehmern einer Sonar-Empfangsanlage (4) empfangbar und zu Empfangssignalen (6) verarbeitbar sind, wobei aus den Empfangssignalen (6) wenigstens ein Amplitudenspektrum (24) erzeugbar ist, wobei die Vorrichtung umfasst:
ein Frequenzlinienmustererkennungsmodul (26), welches derart ausgestaltet ist, um charakteristische Fahrzeugparameter (28) anhand der in dem Amplitudenspektrum (24) enthaltenen Frequenzliniensätze und vorhandenen Einzellinien zu ermitteln,
ein Datenbankvergleichsmodul (30), welches derart ausgestaltet ist, um Werte der charakteristischen Fahrzeugparameter (28) mit vorhandenen Parameterwerten einer Datenbank zu vergleichen,
ein Bewertungsmodul (32), welches derart ausgestaltet ist, um aus dem Vergleich der charakteristischen Fahrzeugparameter (28) und den Parametern der Datenbank einen Übereinstimmungsfaktor (34) zu ermitteln und ein Auswertemodul (36), welches derart ausgestaltet ist, um anhand des Übereinstimmungsfaktors (34) jeweils eine Klassifizierung je Wasserfahrzeug auszugeben,
**gekennzeichnet durch** eine weitere Ausgestaltung des Datenbankvergleichsmoduls (30) derart, um bei Vorhandensein von Einzellinien Quotienten aus den stärksten Einzellinien mit Quotienten aus den Frequenzen der vorhandenen Parameterwerte für Einzellinien der Datenbank zu vergleichen.

10. Vorrichtung nach Anspruch 9,
**gekennzeichnet durch**
eine Ausgestaltung der Datenbank derart, dass diese neben einer Grunddatenbank mit Parameterwerten bekannter Wasserfahrzeuge eine temporäre Datenbank aufweist, welche im laufenden Betrieb des Verfahrens mit neuen Parametern erweiterbar ist.

11. Vorrichtung nach einem der Ansprüche 9 bis 10,
**gekennzeichnet durch**
eine weitere Ausgestaltung des Frequenzlinienmustererkennungsmoduls (26) derart, um zu jedem Wasserfahrzeug zugehörige Frequenzliniensätze und vorhandene Einzellinien in dem Amplitudenspektrum (24) automatisch zu bestimmen.

12. Vorrichtung nach einem der Ansprüche 9 bis 11,
**gekennzeichnet durch**
eine weitere Ausgestaltung des Datenbankvergleichsmoduls (30) derart, so dass für den Vergleich der charakteristischen Fahrzeugparameter (28) mit den Parametern einer Datenbank die Parameter selbst, die zugehörigen Frequenzen und/oder einzelne Quotienten aus zugehörigen Parameterwerten heranziehbar sind.

13. Vorrichtung nach einem der Ansprüche 9 bis 12,
**gekennzeichnet durch**
ein Zusammenfassen der ermittelten charakteristischen Fahrzeugparameter (28) zu einem Parametersatz und eine weitere Ausgestaltung des Datenbankvergleichsmoduls (30) derart, dass der Vergleich der charakteristischen Fahrzeugparameter (28) mit den Parametern der Datenbank satzweise erfolgt.

## Claims

1. Method for classifying one or more watercraft on the basis of the sound waves (2) emitted or transmitted by these craft, which waves are received by an arrangement of waterborne sound sensors of a sonar receiving installation (4) and processed into received signals (6), wherein at least one amplitude spectrum (24) is produced from the received signals (6),
characteristic craft parameters (28) are determined from the frequency line sets and available single lines contained in the amplitude spectrum (24),
values of the characteristic craft parameters (28) are compared with available parameter values of a database,
an associated correspondence factor (34) is determined from the comparison of the characteristic craft parameters (28) with the parameters of the database and the at least one watercraft is classified on the basis of the correspondence factor (34),
**characterised by** that to compare the characteristic craft parameters with the parameters of the database, quotients from the strongest single lines are compared with quotients from the frequencies of the available parameter values for single lines of the database.

2. Method according to claim 1, **characterised by** that the amplitude spectrum (24) is determined by a DEMON analysis or a LOFAR analysis, wherein the amplitude spectrum (24) is averaged and standardised over a predetermined time period.

3. Method according to claim 1 or 2, **characterised by** that the frequency line sets and available single lines in the amplitude spectrum (24) are determined automatically for each watercraft.

4. Method according to one of the preceding claims, **characterised by** that, for the comparison of the characteristic craft parameters (28) with the parameters of the database, the parameters themselves, the associated frequencies and/or individual quotients from associated parameter values are used, in particular quotients from basic frequencies of harmonic frequency line sets.

5. Method according to one of the preceding claims, **characterised by** that the correspondence factor (34) is determined on the basis of assessment classes and each parameter to be compared is assigned to one of these assessment classes, wherein the assessment classes with an assigned factor in each case go into the determination of the correspondence factor (34).

6. Method according to one of the preceding claims, **characterised by** that the characteristic craft parameters (28) determined are combined into a parameter set for each watercraft and the comparison of the characteristic craft parameters (28) with the parameters of the database takes place set-wise.

7. Method according to one of the preceding claims, **characterised by** that other measuring data (35) and/or input values (35) are taken into consideration for determining the correspondence factor (34).

8. Method according to one of the preceding claims, **characterised by** that the method for classification is carried out repeatedly, in particular repeatedly in a cyclical manner, wherein a classification result is filed for each run-through of the method, and the classification is refined taking into account, in particular by correlation, preceding classification results.

9. Device for classifying one or more watercraft on the basis of the sound waves (2) emitted or transmitted by these craft, which waves can be received by an arrangement of waterborne sound sensors of a sonar receiving installation (4) and can be processed into received signals (6), wherein at least one amplitude spectrum (24) can be produced from the received signals (6), wherein the device comprises:
a frequency line pattern identification module (26), which is configured in such a way as to determine characteristic craft parameters (28) on the basis of the frequency line sets and available single lines contained in the amplitude spectrum (24),
a database comparison module (30), which is configured in such a way as to compare values of the characteristic craft parameters (28) with available parameter values of a database,
an assessment module (32), which is configured in such a way as to determine a correspondence factor (34) from the comparison of the characteristic craft parameters (28) and the parameters of the database and an evaluation module (36),
which is configured in such a way as to output a classification for each watercraft respectively on the basis of the correspondence factor (34),
**characterised by** a further configuration of the database comparison module (30) in such a way as to compare quotients from the strongest single lines with quotients from the frequencies of the available parameter values for single lines of the database if single lines are present.

10. Device according to claim 9, **characterised by** a configuration of the database in such a way that this has, in addition to a basic database with parameter values of known watercraft, a temporary database, which can be expanded by new parameters in the ongoing operation of the method.

11. Device according to one of claims 9 to 10, **characterised by** a further configuration of the frequency line pattern identification module (26) in such a way as to determine frequency line sets and available single lines associated with each watercraft automatically in the amplitude spectrum (24).

12. Device according to one of claims 9 to 11, **characterised by** a further configuration of the database comparison module (30) in such a way that, for the comparison of the characteristic craft parameters (28) with the parameters of a database, the parameters themselves, the associated frequencies and/or individual quotients from associated parameter values can be used.

13. Device according to one of claims 9 to 12, **characterised by** a combination of the characteristic vehicle parameters (28) determined into a parameter set and another configuration of the database comparison module (30) so that the comparison of the characteristic craft parameters (28) with the parameters of the database takes place set-wise.

## Revendications

1. Procédé de classement d un ou plusieurs véhicules nautiques en fonction des ondes sonores (2) rayonnées ou émises par ces véhicules, lesquelles sont reçues au moyen d un agencement de récepteurs de sons transmis par l eau d une installation de réception à sonar (4) et transformées en signaux de réception (6), lesdits signaux de réception (6) permettant de produire au moins un spectre d amplitude (24),
des paramètres caractéristiques du ou des véhicules (28) étant déterminés au moyen des ensembles de lignes de fréquences contenus dans le spectre d amplitude (24) et des lignes individuelles y existant,
les valeurs des paramètres caractéristiques du ou des véhicules (28) étant comparées aux valeurs de paramètres existantes d une banque de données,
un facteur de concordance (34) correspondant étant déterminé à partir de la comparaison effectuée entre les paramètres caractéristiques du ou des véhicules (28) et les paramètres de la banque de données, et l au moins un véhicule nautique est classé à l aide du facteur de concordance (34),
**caractérisé en ce que** pour effectuer la comparaison entre les paramètres caractéristiques du ou des véhicules et les paramètres de la banque de données, on compare des quotients issus des lignes individuelles les plus fortes à des quotients issus des fréquences des valeurs de paramètres existantes pour des lignes individuelles de la banque de données.

2. Procédé selon la revendication 1, **caractérisé en ce que** le spectre d amplitude (24) est déterminé au moyen d une analyse DEMON ou d une analyse LOFAR, ledit spectre d amplitude (24) étant moyenné et normalisé sur une période prédéterminée.

3. Procédé selon la revendication 1 ou 2, **caractérisé en ce que** les ensembles de lignes de fréquences et les lignes individuelles existant dans le spectre d amplitude (24) sont automatiquement attribués à chaque véhicule nautique.

4. Procédé selon l une des revendications précédentes, **caractérisé en ce que** pour effectuer la comparaison entre les paramètres caractéristiques du ou des véhicules (28) et les paramètres de la banque de données, on exploite les paramètres eux-mêmes, les fréquences correspondantes et/ou des quotients individuels issus de valeurs de paramètres correspondantes, notamment des quotients issus de fréquences fondamentales d ensembles de lignes de fréquences harmoniques.

5. Procédé selon l une des revendications précédentes, **caractérisé en ce que** le facteur de concordance (34) est déterminé au moyen de classes d évaluation et chacun des paramètres à comparer est attribué à une de ces classes d évaluation, lesdites classes d évaluation entrant chacune dans la détermination du facteur de concordance (34) avec un facteur correspondant.

6. Procédé selon l une des revendications précédentes, **caractérisé en ce que** les paramètres caractéristiques du ou des véhicules (28) déterminés sont regroupés en un ensemble de paramètres propre à chaque véhicule nautique et la comparaison entre les paramètres caractéristiques du ou des véhicules (28) et les paramètres de la banque de données s effectue par ensembles.

7. Procédé selon l une des revendications précédentes, **caractérisé en ce que** d autres données de mesure (35) et/ou valeurs d entrée (35) sont prises en compte pour la détermination du facteur de concordance (34).

8. Procédé selon l une des revendications précédentes, **caractérisé en ce que** le procédé de classement est mis en uvre de manière répétée, notamment de manière répétée par cycles, un résultat de classement étant produit à chaque mise en uvre du procédé, et le classement étant affiné compte tenu des résultats de classement précédents, notamment par corrélation.

9. Dispositif de classement d un ou plusieurs véhicules nautiques en fonction des ondes sonores (2) rayonnées ou émises par ces véhicules, lesquelles sont susceptibles d être reçues au moyen d un agencement de récepteurs de sons transmis par l'eau d'une installation de réception à sonar (4) et d être transformées en signaux de réception (6), lesdits signaux de réception (6) permettant de produire au moins un spectre d amplitude (24),
ledit dispositif comprenant :
un module de reconnaissance de la distribution des lignes de fréquence (26) conçu pour déterminer des paramètres caractéristiques du ou des véhicules (28) au moyen des ensembles de lignes de fréquences contenus dans le spectre d amplitude (24) et des lignes individuelles y existant,
un module de comparaison à une banque de données (30) conçu pour comparer les valeurs des paramètres caractéristiques du ou des véhicules (28) aux valeurs de paramètres existantes d une banque de données,
un module de calcul (32) conçu pour déterminer un facteur de concordance (34) à partir de la comparaison effectuée entre les paramètres caractéristiques du ou des véhicules (28) et les paramètres de la banque de données, et un module d évaluation (36) conçu pour produire un classement respectif pour chaque véhicule nautique à l aide du facteur de concordance (34),
**caractérisé par** une autre conception du module de comparaison à une banque de données (30), à savoir pour comparer, en présence de lignes individuelles, des quotients issus des lignes individuelles les plus fortes à des quotients issus des fréquences des valeurs de paramètres existantes pour les lignes individuelles de la banque de données.

10. Dispositif selon la revendication 9, **caractérisé par** une conception de la banque de données telle que celle-ci présente, outre une banque de données fondamentale comportant des valeurs de paramètres de véhicules nautiques connus, une banque de données temporaire susceptible d être complétée par des nouveaux paramètres au cours du déroulement du procédé.

11. Dispositif selon l une des revendications 9 et 10, **caractérisé par** une autre conception du module de reconnaissance de la distribution des lignes de fréquence (26), à savoir pour attribuer automatiquement à chaque véhicule nautique les ensembles de lignes de fréquences et les lignes individuelles existant dans le spectre d amplitude (24) et qui lui correspondent.

12. Dispositif selon l une des revendications 9 à 11, **caractérisé par** une autre conception du module de comparaison à une banque de données (30), telle que, pour effectuer la comparaison entre les paramètres caractéristiques du ou des véhicules (28) et les paramètres d une banque de données, il peut exploiter les paramètres eux-mêmes, les fréquences correspondantes et/ou des quotients individuels issus de valeurs de paramètres correspondantes.

13. Dispositif selon l une des revendications 9 à 12, **caractérisé par** un regroupement des paramètres caractéristiques du ou des véhicules (28) déterminés, en un ensemble de paramètres, et **par** une autre conception du module de comparaison à une banque de données (30), telle que la comparaison entre les paramètres caractéristiques du ou des véhicules (28) et les paramètres de la banque de données s effectue par ensembles.
